Europäisches Patentamt

**European Patent Office**

**Office européen des brevets**

(19)

(11) Veröffentlichungsnummer: **0 029 922**
**A2**

(12) # EUROPÄISCHE PATENTANMELDUNG

(21) Anmeldenummer: 80106691.1

(22) Anmeldetag: 31.10.80

(51) Int. Cl.³: **F 24 D 19/10**
**G 05 D 23/275**

(30) Priorität: 04.12.79 DE 2948637

(43) Veröffentlichungstag der Anmeldung:
10.06.81 Patentblatt 81/23

(84) Benannte Vertragsstaaten:
AT BE CH FR GB IT LI LU NL SE

(71) Anmelder: Frei, Hans-Joachim
Brunnenstrasse 1
D-6480 Wächtersbach(DE)

(71) Anmelder: Hartung, Philibert
Wiesenweg 13
D-6486 Brachttal 1(DE)

(71) Anmelder: Merten, Ernst
Zur schönen Aussicht 21
D-6551 Gutenberg(DE)

(72) Erfinder: Frei, Hans-Joachim
Brunnenstrasse 1
D-6480 Wächtersbach(DE)

(72) Erfinder: Hartung, Philibert
Wiesenweg 13
D-6486 Brachttal 1(DE)

(72) Erfinder: Merten, Ernst
Zur schönen Aussicht 21
D-6551 Gutenberg(DE)

(74) Vertreter: Keil, Rainer, Dipl.-Phys. et al,
Patentanwälte MERTENS & KEIL Ammelburgstrasse 34
D-6000 Frankfurt am Main(DE)

(54) Heizungssteuerungseinrichtung.

(57) Die Erfindung bezieht sich auf eine Heizungssteuerungseinrichtung, mit welcher eine einfachere und genauere Anpassung und Regulierung der Heiztemperatur möglich ist. Dies wird im wesentlichen dadurch erreicht, daß in der jeweiligen Vorlaufleitung der einzelnen Heizelemente ein elektrisches Magnetventil liegt, welches von wenigstens einem räumlich gesondert von dem Heizelement in den zu beheizenden Raum angeordneten Thermostaten ansteuerbar ist.

./...

EP 0 029 922 A2

Hans-Joachim Frei
Brunnenstraße 1

6480 Wächtersbach


Philibert Hartung
Wiesenweg 13

6486 Brachttal 1


Ernst Merten
Zur schönen Aussicht 21

6551 Gutenberg

Heizungssteuerungseinrichtung


Die Erfindung betrifft eine Heizungssteuerungseinrichtung an einem einer im Dauerbetrieb, z.B. mit einer Umwälzpumpe zusammenarbeitenden Heizquelle zugeordneten, z.B. mit Warmwasser versorgten, Heizleitungssystem mit einzelnen Heizelementen, z.B. Heizkörpern und/oder Heizkreisen, z.B. Fußbodenheizkreisen.

Derartige Heizungssteuerungseinrichtungen sind an sich bekannt. Sie weisen an den einzelnen Heizkörpern beispielsweise Absperrschieber oder Heizkörperthermostaten auf, die je nach Wärmebedarf von Hand auf eine gewünschte Temperatur einzustellen sind. Mit Hilfe der Heizkörperthermostaten wird versucht, auch bei schwankenden äußeren Einflußfaktoren, die Zimmertemperatur konstant zu halten, dies jedoch mit beschränktem Erfolg, da die Thermostaten an ungünstiger Stelle im Heizkörper-Fenster-Bereich liegen, wo es zu Wärmestaus, Belüftungseinflüssen, Sonneneinwirkung und dergl.

kommen kann. Nachteilig ist dabei auch, selbst wenn Motormischventile, Außensteuerung und Heizkörperregelventile
vorgesehen sind, daß die Raumbeheizung nur schwierig den
tatsächlichen Bedarf anpaßbar ist, beispielsweise in Abwesenheitszeiten, Nachtzeiten und dergl. Dieser Nachteil kommt
bereits bei Einzelhäusern und Etagenwohnungen, aber noch
vielmehr bei Hotels, Bürogebäuden, öffentlichen Gebäuden,
wie Schulen, mit vielen einzeln zu beheizenden Räumen zur
Geltung.

Aufgabe der vorliegenden Erfindung ist es, eine Heizungssteuerungseinrichtung der gattungsgemäßen Art so auszugestalten, daß durch weitgehende Anpassung und genaue Regelung der Heiztemperatur an die tatsächlich sich ändernden
Bedürfnisse eine Energie- und damit Heizkosteneinsparung
erfolgt.

Die Aufgabe wird erfindungsgemäß dadurch gelöst, daß in
der jeweiligen Vorlaufleitung der einzelnen Heizelemente
ein elektrisches Magnetventil liegt, welches von wenigstens
einem räumlich gesondert von dem Heizelement in dem zu
beheizenden Raum angeordneten Thermostaten für Ein- oder
Mehrbereichstemperaturregelung ansteuerbar ist.

Der Einsatz der vorliegenden Erfindung ist von der Form
der Primärenergie unabhängig, d.h. sowohl bei Warmwasserheizung, als auch bei Dampf- oder Luftheizung, und zwar
sowohl bei Heizkörperheizung als auch bei Fußbodenheizung
einsetzbar. Anstelle der bisherigen Heizkörperhandmisch-
und -absperrventile bzw. Heizkörperthermostaten tritt bei
der Erfindung ein elektrisches Magnetventil. Der dem Magnetventil zugeordnete Thermostat ist in jedem einzelnen zu
beheizenden Raum im Aufenthaltsbereich räumlich getrennt
vom Heizelement an günstigster Stelle angeordnet. Damit

0029922
MERTENS & KEIL
PATENTANWÄLTE

ist eine genaue Innenraumtemperaturregulierung für jeden einzelnen Raum gesondert möglich.

Die jeweiligen Thermostaten jedes Heizelementes können von einer z.B. eine Zentraluhr aufweisenden Steuergerät zeitbereichsspezifisch angesteuert werden. Damit ist es nicht nur möglich, eine Nachtabsenkung der Heiztemperatur für jedes einzelne Heizelement individuell zu programmieren, es können auch Teilbereiche der Heizungsanlage oder die gesamte Heizungsanlage auch tagsüber in ihrer Temperatur nach einem vorgegebenen Zeitablauf abgesenkt und wieder angehoben werden, was insbesondere für Berufstätige mit vorgegebenen Abwesenheitszeiten oder Geschäftshaushalte mit vorgegebenen Dienststunden von großem Vorteil ist. Noch wirksamer erweist sich die erfindungsgemäße Heizungssteuerungseinrichtung beispielsweise in Krankenhäusern oder Schulen, wo je nach Belegung bzw. Stundenplan in den einzelnen Räumen unterschiedlich hohe und zeitlich unterschiedliche Temperaturen benötigt werden. Diese lassen sich von dem zentralen Steuergerät aus beherrschen. Die thermostatische Regelung der Temperatur kann mit einer Genauigkeit von $\pm$ 0,5$^{\circ}$C erfolgen. Die thermische Rückführung verhindert Überheizung beim Hochfahren der Temperatur.

Die erfindungsgemäße Einzelraumsteuerung hat auch den Vorteil, daß durch die Regelung jedes einzelnen Raumes andere Einflußfaktoren, z.B. kleine oder große Personenzahl, Sonneneinstrahlung oder andere Wärmequellen selbsttätig unter optimaler Energieersparnis berücksichtigt werden. Selbstverständlich läßt sich auch eine Absenkung der Heiztemperatur an Wochenenden, in Ferien oder dergl. Zeiträume vorprogrammieren.

Dem jeweiligen Magnetventil kann ein Betriebsstunden- oder Stromzähler zugeordnet sein. Damit wird eine Einzelkosten-

0029922
MERTENS & KEIL
PATENTANWÄLTE

erfassung über die Einschaltdauer der jeweiligen Magnetventile, die in direktem Verhältnis zu der Wärmeträgerflußmenge steht, erhalten. Eine Gesamtkostenerfassung für
bestimmte Heizbereiche erhält man über den Stromverbrauch
der Magnetspulen, die ebenfalls als Maß für die Öffnungszeit
der Ventile und den Energieverbrauch genommen werden kann.
Dabei können besondere Einflußgrößen, wie beispielsweise
Druck- und Temperaturabfall in mehrstöckigen Gebäuden als
Faktoren in der Berechnung berücksichtigt werden.

Jedes Magnetventil wird vorzugsweise von zwei unabhängigen
Thermostaten, einem für die Bedarfs- und einem für die
Ruheperiode, angesteuert. Auf diese Weise können Energiekosteneinsparungen im Vergleich mit herkömmlichen Heizungen
mit Handmischventil und Absperrventil an den Heizkörpern
von bis zu 40 bis 50 % erreicht werden, da störungsfrei
eine Absenktemperatur in den jeweiligen Ruheperioden auf
beispielsweise 6$^O$ C genau einstellbar ist. Die Kostenersparnis wird deutlich wenn man berücksichtigt, daß eine
Verringerung der Heiztemperatur von 1$^O$ C einer Energieeinsparung von etwa 6% entspricht.

Bei Fußbodenheizkreisen kann neben der Überwachung der
Raumtemperatur eine Überwachung der Fußbodenoberflächentemperatur dadurch erfolgen, daß den jeweiligen Thermostaten Fußbodenoberflächentemperaturfühler zugeordnet sind.

Die erfindungsgemäße Heizungssteuereinrichtung läßt sich
kostengünstig und schnell in bereits vorhandenen Heizanlagen
nachrüsten, so daß die Installation auch während der Heizperiode erfolgen kann. Dabei wird bevorzugt beispielsweise
zunächst die gesamte Elektromontage fertiggestellt, so
daß nach der anschließenden Ventilmontage sofort weitergeheizt
werden kann. Auch bei Neuerstellung der erfindungsgemäßen Heizungssteuerungseinrichtung ergeben sich gegenüber herkömmlichen Systemen erhebliche Investitionskosteneinsparungen, da eine Außensteuerung und Heizkörperregelventile entfallen können. Da die erfindungsgemäße Heizungssteuerungseinrichtung vorzugsweise von einem zentralen Steuergerät überwacht wird, was beispielsweise beim Hausmeister installiert ist, wird auch verhindert, daß willkürliche Veränderungen der Einstellung der Heizkörpertemperaturen vorgenommen werden. Auch auf diese Weise sind weitere Heizkosten einzusparen.

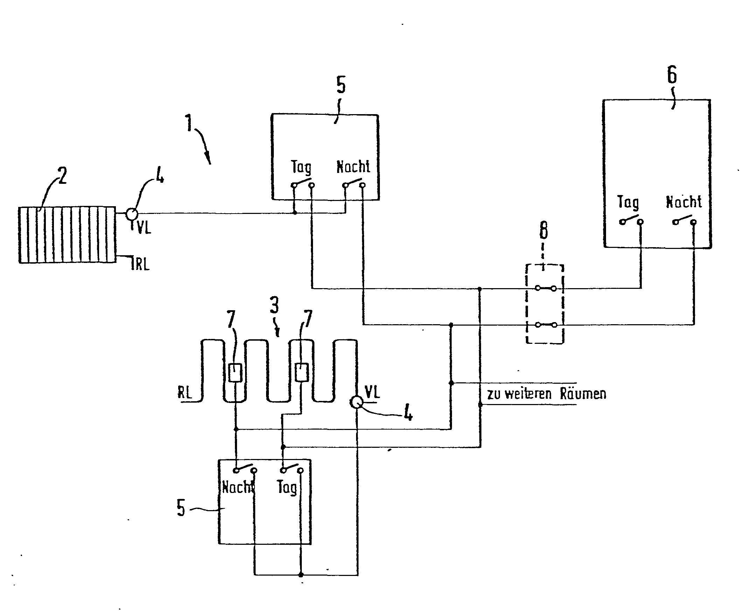

Anhand der beiliegenden Zeichnung, wird anhand einer schematischen Darstellung ein Ausführungsbeispiel der erfindungsgemäßen Heizungssteuerungseinrichtung näher erläutert.

Die Heizungssteuerungseinrichtung 1 weist in dem dargestellten Fall als Heizelemente beispielsweise einen Heizkörper 2 und einen Fußbodenheizkreis 3 auf, die man sich in gesonderten Räumen untergebracht denken kann. In der jeweiligen Vorlaufleitung VL des Heizkörpers 2 und des Fußbodenheizkreises 3 ist ein elektrisches Magnetventil 4 angeordnet, welches gesteuert von einem jeweiligen Thermostaten 5 geöffnet und geschlossen wird. Die jeweiligen Thermostaten 5 sind räumlich getrennt von dem Heizkörper 2 bzw. dem Fußbodenheizkreis 3 an geeigneter Stelle in dem zu beheizenden Raum angeordnet, so daß die Überwachung der einzuhaltenden Temperatur an einer Stelle erfolgt, die äußere Einflüsse wie Wärmestau, Zimmerbelüftung, Sonneneinstrahlung und dergl. mehr ausschließt, die gewünschten Einflüsse wie Zahl anwesender Personen, zusätzliche vorhandene Wärmequellen und dergl., die zu einer gleichmäßigen Anhebung oder Absenkung der Raumtemperatur führen, aber berücksichtigt. Im Falle des Fußbodenheizkreises 3 sind dem Thermostaten 5 noch Fußbodenoberflächentemperaturfühler 7 zugeordnet, so daß auch diese Temperatur in den Regelvorgang einbezogen wird. In dem dargestellten Fall weisen

0029922
MERTENS & KEIL
PATENTANWÄLTE

die Thermostaten 5 jeweils eine Tag- und eine Nachtfunktion auf, gemäß welchen unterschiedliche Regeltemperaturen vorhanden sein sollen, so beispielsweise am Tag $18^{\circ}$ und in der Nacht $6^{\circ}$ C. Die Ansteuerung der Thermostaten 5 wird von einem zentralen Steuergerät 6 vorgenommen, an welches die einzelnen Heizelementkreise über einen Klemmenkasten 8 angeschlossen sind. Das Steuergerät 6 weist beispielsweise eine Zeituhr auf, mit Hilfe derer die eine oder andere Funktion der Thermostaten 5, also Tag- oder Nachtfunktion in Wirkung gesetzt werden. Beliebige andere Zeitfunktionssteuerungen sind anstelle der Nacht-Tagsteuerung denkbar, jeweils angepaßt an die Benutzungsgewohnheiten der aufzuheizenden Räume. So kann beispielsweise eine programmierte Steuerung in Schulen oder Krankenhäusern für sämtliche Räume nach dem Belegungsplan erfolgen.

Auf diese Weise läßt sich eine erhebliche Heizkosteneinsparung erzielen.

0029922
MERTENS & KEIL
PATENTANWÄLTE

Bezugszeichenliste:

1   Heizungssteuerungseinrichtung

2   Heizkörper

3   Fußbodenheizkreis

4   Magnetventile

5   Thermostaten

6   Steuergerät

7   Oberflächentemperaturfühler

8   Klemmkasten

**0029922**

**MERTENS & KEIL**

**PATENTANWÄLTE**

6000 Frankfurt am Main

T 16 P 3 EP
K/De

30. Oktober 1980

Hans-Joachim Frei
Brunnenstraße 1

6480 Wächtersbach

Philibert Hartung
Wiesenweg 13

6486 Brachttal 1

Ernst Merten
Zur schönen Aussicht 21

6551 Gutenberg

'Heizungssteuerungseinrichtung"

Patentansprüche:

1. Heizungssteuerungseinrichtung an einem einer im Dauerbetrieb z.B. mit einer Umwälzpumpe zusammenarbeitenden Heizquelle zugeordneten, z.B. mit Warmwasser versorgten, Heizleitungssystem mit einzelnen Heizelementen, z.B. Heizkörpern und/oder Heizkreisen, z.B. Fußbodenheizkreisen, dadurch gekennzeichnet, daß in der jeweiligen Vorlaufleitung (VL) der einzelnen Heizelemente (2, 3) ein elektrisches Magnetventil (4) liegt, welches von wenigstens einem räumlich gesondert von dem Heizelement (2, 3) in dem zu beheizenden Raum angeordneten Thermostaten (5) für Ein- oder Mehrbereichstemperaturregelung ansteuerbar ist.

0029922
MERTENS & KEIL
PATENTANWÄLTE

2. Heizungssteuerungseinrichtung nach Anspruch 1, dadurch gekennzeichnet, daß die jeweiligen Thermostaten (5) jedes Heizelementes (2, 3) von einem zentralen, z.B. eine Zeituhr aufweisenden Steuergerät (6) zeitbereichsspezifisch ansteuerbar ist.

3. Heizungssteuerungseinrichtung nach Anspruch 1 oder 2, dadurch gekennzeichnet, daß dem jeweiligen Magnetventil (5) ein Betriebsstunden- oder Stromzähler zugeordnet ist.

4. Heizungssteuerungseinrichtung nach einem der Ansprüche 1 bis 3, dadurch gekennzeichnet, daß jedes Magnetventil (4) von zwei unabhängigen Thermostaten (5), einem für die Bedarfs- und einem für den Ruheperiode, ansteuerbar ist.

5. Heizungssteuerungseinrichtung nach einem der Ansprüche 1 bis 4, dadurch gekennzeichnet, daß bei Fußbodenheizkreisen (3) dem Thermostaten (5) Fußbodenoberflächentemperaturfühler (7) zugeordnet sind.